(19) Europäisches Patentamt
European Patent Office
Office européen des brevets

(11) EP 1 711 544 B1

(12) EUROPÄISCHE PATENTSCHRIFT

(45) Veröffentlichungstag und Bekanntmachung des Hinweises auf die Patenterteilung:
**15.10.2008 Patentblatt 2008/42**

(21) Anmeldenummer: **05707171.4**

(22) Anmeldetag: **03.02.2005**

(51) Int Cl.:
***C08F 220/10*** *(2006.01)* ***C08F 216/12*** *(2006.01)*
***C08F 222/10*** *(2006.01)* ***C04B 24/26*** *(2006.01)*
***C08F 290/06*** *(2006.01)*

(86) Internationale Anmeldenummer:
**PCT/EP2005/001087**

(87) Internationale Veröffentlichungsnummer:
**WO 2005/075529 (18.08.2005 Gazette 2005/33)**

(54) **COPOLYMERE AUF BASIS VON UNGESÄTTIGTEN MONO- ODER DICARBONSÄURE-DERIVATEN UND OXYALKYLENGLYKOL-ALKENYLETHERN, VERFAHREN ZU DEREN HERSTELLUNG UND IHRE VERWENDUNG**

COPOLYMERS BASED ON UNSATURATED MONO- OR DICARBOXYLIC ACID DERIVATIVES AND OXYALKYLENEGLYCOL-ALKENYL ETHERS, METHOD FOR THE PRODUCTION AND USE THEREOF

COPOLYMERES A BASE DE DERIVES D'ACIDE MONO- OU DICARBOXYLIQUE INSATURES ET D'ALCENYLETHERS D'OXYALKYLENEGLYCOL, PROCEDE POUR LES PRODUIRE ET LEUR UTILISATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **04.02.2004 DE 102004005434**

(43) Veröffentlichungstag der Anmeldung:
**18.10.2006 Patentblatt 2006/42**

(73) Patentinhaber:
- **Construction Research & Technology GmbH 83308 Trostberg (DE)**
- **Evonik Goldschmidt GmbH 45127 Essen (DE)**

(72) Erfinder:
- **MORARU, Bogdan 83022 Rosenheim (DE)**
- **HÜBSCH, Christian 83703 Gmund (DE)**
- **ALBRECHT, Gerhard 83342 Tacherting (DE)**
- **SCHEUL, Stefanie 83308 Trostberg (DE)**
- **JETZLSPERGER, Eva 84579 Unterneukirchen (DE)**

(74) Vertreter: **Böhm, Brigitte et al
Weickmann & Weickmann
Patentanwälte
Postfach 860 820
81635 München (DE)**

(56) Entgegenhaltungen:
**DE-A1- 19 834 173** **DE-A1- 19 926 611**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Copolymere auf Basis von ungesättigten Mono- oder Dicarbonsäure-Derivaten und Oxyalkylenglykol-Alkenylethern, Verfahren zu deren Herstellung sowie die Verwendung dieser Copolymere als Zusatzmittel für wässrige Suspensionen auf Basis von mineralischen oder bituminösen Bindemitteln.

Es ist bekannt, dass man wässrigen Suspensionen von hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Diese in der Regel ionische Gruppen enthaltenden Zusatzmittel sind in der Lage, Feststoffagglomerate aufzubrechen, die gebildeten Teilchen zu dispergieren und auf diese Weise die Verarbeitbarkeit speziell von hochkonzentrierten Suspensionen zu verbessern. Dieser Effekt wird gezielt bei der Herstellung von Baustoffmischungen, auf der Basis von Zement, Kalk sowie calciumsulfatbasierenden hydraulischen Bindemitteln ggf. auch im Gemisch mit organischen (z. B. bituminösen) Anteilen und weiterhin für keramische Massen, Feuerfestmassen und Ölfeldbaustoffe ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern; werden Zusatzmittel eingesetzt, die im allgemeinen als Wasserreduktions- oder Fließmittel bezeichnet werden. Als derartige Mittel sind vor allem Polykondensationsprodukte auf Basis von Naphthalin- oder Alkylnaphthalinsulfonsäuren (vgl. EP-A 214 412) bzw. Sulfonsäuregruppen enthaltende Melamin-Formaldehydharze (vgl. DE-PS 16 71 017) bekannt.

Nachteilig bei diesen Zusatzmitteln ist die Tatsache, dass ihre ausgezeichnete verflüssigende Wirkung insbesondere im Betonbau nur über eine kurze Zeitspanne bestehen bleibt. Der Abfall der Verarbeitbarkeit von Betonmischungen ("Slump-loss") in kurzer Zeit kann insbesondere dort zu Problemen führen, wo zwischen Herstellung und Einbau des Frischbetons, bspw. bedingt durch lange Förder- und Transportwege, ein großer Zeitraum liegt.

Ein zusätzliches Problem ergibt sich bei der Anwendung derartiger Fließmittel im Bergbau und im Innenbereich (Gipskartonplattentrocknung, Anhydritfließestrich-Anwendungen, Betonfertigteilherstellung), wo es zur Freisetzung des in den Produkten herstellungsbedingt enthaltenden toxischen Formaldehyds und damit zu beträchtlichen arbeitshygienischen Belastungen kommen kann. Aus diesem Grund wurde auch schon versucht, statt dessen formaldehydfreie Betonfließmittel aus Maleinsäuremonoestern und Styrol bspw. entsprechend der EP-A 306 449 zu entwickeln. Die Fließwirkung von Betonmischungen kann mit Hilfe dieser Zusatzmittel über einen ausreichend langen Zeitraum aufrechterhalten werden, jedoch geht die ursprünglich vorhandene, sehr hohe Dispergierwirkung nach Lagerung der wässrigen Zubereitung des Fließmittels, bedingt durch die Hydrolyse des polymeren Esters, sehr schnell verloren.

Dieses Problem tritt bei Fließmitteln aus Alkylpolyethylenglykolallylethern und Maleinsäureanhydrid entsprechend der EP-A 373 621 nicht auf. Jedoch handelt es sich bei diesen Produkten, ähnlich wie bei den zuvor beschriebenen, um oberflächenaktive Verbindungen, die unerwünscht hohe Anteile von Luftporen in die Betonmischung einführen, woraus Einbußen bei der Fertigkeit und Beständigkeit des erhärteten Baustoffs resultieren.

Aus diesem Grund ist es erforderlich, den wässrigen Lösungen dieser Polymerverbindungen Antischaummittel, wie z. B. Tributylphosphat, Silikonderivate und verschiedene wasserunlösliche Alkohole im Konzentrationsbereich von 0,1 bis 2 Ges.-% bezogen auf den Feststoffgehalt, zuzusetzen. Das Einmischen dieser Komponenten und die Aufrechterhaltung einer lagerstabilen homogenen Form der entsprechenden Formulierungen gestaltet sich auch selbst denn recht schwierig, wenn diese Antischaummittel in Form von Emulsionen zugesetzt werden.

Durch den vollständigen oder zumindest teilweisen Einbau einer entschäumend oder antilufteinführenden Struktureinheit in das Copolymer kann das Problem der Entmischung gemäß der DE 195 13 126 A1 gelöst werden.

Es hat sich jedoch gezeigt, dass die hohe Wirksamkeit und der geringe "Slump-loss" der hier beschriebenen Copolymere oft zu unzureichenden 24 Sunden-Festigkeiten des Betons führt. Auch weisen derartige Copolymere insbesondere dort nicht die optimalen Eigenschaften auf, wo mit geringstmöglichem Wasseranteil ein besonders dicht gefügter und daher hochfester und hochbeständiger Beton erzeugt und auf eine Dampfhärtung (Fertigteilindustrie) zur Beschleunigung des Erhärtungsprozesses verzichtet werden soll.

Zur Lösung dieses Problems wurden gemäß der DE 199 26 611 A1 Copolymere von ungesättigten Mono- oder Dicarbonsäure-Derivaten und Oxyalkylenglykol-Alkenylethern vorgeschlagen, die mit geringer Dosierung die Verarbeitbarkeit hochkonzentrierter Baustoffmischungen praxisgerecht lange aufrechterhalten können, bei einer durch eine extreme Absenkung des Wasser/Bindemittel-Verhältnisses gleichzeitig erhöhten Festigkeit im erhärteten Zustand des Baustoffs. Als nachteilig hat es sich jedoch bei diesen Copolymeren mit relativ kurzen Seitenketten erwiesen, dass die Frühfestigkeitsentwicklung der entsprechenden Baustoffmischungen nicht optimal war.

Der vorliegenden Erfindung lag daher die Aufgabe zugrunde, neue Copolymere bereitzustellen, welche die genannten Nachteile entsprechend dem Stand der Technik nicht aufweisen, das heißt, die mit geringer Dosierung die

Verarbeitbarkeit hochkonzentrierter Baustoffmischungen praxisgerecht lange aufrecht erhalten können und gleichzeitig den entsprechenden Baustoffen derart hohe Festigkeitswerte nach nur wenigen Stunden verleihen, dass es möglich ist, die Schalungen frühzeitig zu entfernen und damit die Zykluszeiten bei der Herstellung von Betonteilen im Fertigteilwerk zu reduzieren bzw. den Fortschritt auf der Baustelle signifikant zu beschleunigen.

Diese Aufgabe wurde erfindungsgemäß durch die Copolymere entsprechend Anspruch 1 gelöst. Es hat sich nämlich überraschenderweise gezeigt, dass die erfindungsgemäßen Produkte auf der Basis von ungesättigten Mono- oder Dicarbonsäure-Derivaten und Oxyalkylenglykol-Alkenylethern mit langen Seitenketten in geringster Dosierung wässrigen Bindemittelsuspensionen ausgezeichnete Verarbeitungseigenschaften verleihen und gleichzeitig eine hohe Wasserreduktion der Betone zu bewirken. Besonders überraschend war die Tatsache, das es möglich ist, die Betonschalungen aufgrund der extrem schnellen Festigkeitsentwicklung schon nach unerwartet kurzen Zeiten zu entfernen und damit die Wirtschaftlichkeit im Betonbau drastisch zu steigern.

Die Copolymere entsprechend der vorliegenden Erfindung enthalten mindestens 3, vorzugsweise jedoch 4 Baugruppen a), b), c) und d). Die erste Baugruppe a) stellt ein Mono- oder Dicarbonsäure-Derivat mit der allgemeinen Formel Ia, Ib oder Ic dar.

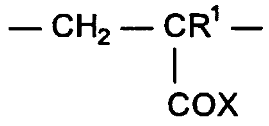

Ia

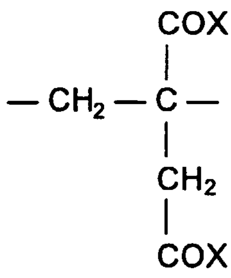

Ib

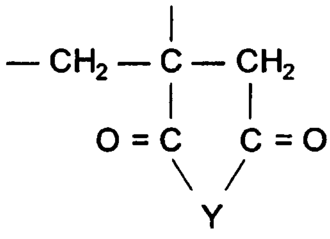

Ic

Beim Monocarbonsäure-Derivat Ia bedeutet $R^1$ Wasserstoff oder einen aliphatischen Kohlenwasserstoffrest mit 1 bis 20 C-Atomen, vorzugsweise eine Methylgruppe. X in den Strukturen Ia und Ib steht für $-OM_a$ und/oder $-O-(C_mH_{2m}O)_n-R^2$ bzw. $-NH-(C_mH_{2m}O)_n-R^2$ mit folgender Bedeutung für M, a, m, n und $R^2$:

M bedeutet Wasserstoff, ein ein- oder zweiwertiges Metallkation (vorzugsweise Natrium-, Kalium-, Calcium- oder Magnesium-Ion), Ammonium, ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären $C_{1-20}$-Alkylaminen, $C_{1-20}$-Alkanolaminen, $C_{5-8}$-Cycloalkylaminen und $C_{8-14}$-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

$R^2$ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, m = 2 bis 4 sowie n = 0 bis 200. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Anstelle des oder neben dem Dicarbonsäure-Derivat gemäß Formel Ib kann die Baugruppe a) (Mono- oder Dicarbonsäure-Derivat) auch in cyclischer Form entsprechend Formel Ic vorliegen, wobei Y = O (Säureanhydrid) oder $NR^2$ (Säureimid) darstellen kann mit der oben bezeichneten Bedeutung für $R^2$.

Die zweite Baugruppe b) entspricht Formel II

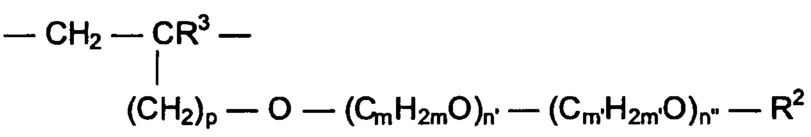

II

und leitet sich von Oxyalkylenglykol-Alkenylethern ab, wobei m' für 2 bis 4, n' + n" Für 250 bis 500 sowie p für 0 bis 3 stehen und $R^2$ bzw. m die oben bezeichnete Bedeutung besitzen.

$R^3$ bedeutet wiederum Wasserstoff oder einen aliphatischen Kohlenwasserstoffrest mit 1 bis 5 C-Atomen, der ebenfalls linear oder verzweigt bzw. auch ungesättigt sein kann.

Gemäß den bevorzugten Ausführungsformen bedeuten in den Formeln Ia, Ib und II m = 2 und/oder 3, so dass es sich um Polyalkylenoxid-Gruppen handelt, die sich von Polyethylenoxid und/oder Polypropylenoxid ableiten. Außerdem kann in Formel Ia n insbesondere 1 bis 150 bedeuten. In einer weiteren bevorzugten Ausführungsform bedeutet p in Formel II 0 oder 1, d. h. es handelt sich um Vinyl- und/oder Allylpolyalkoxylate. Besonders bevorzugt sind in der Formel II p = 0 sowie m = 2.

Die dritte Baugruppe c) entspricht der Formel IIIa oder IIIb

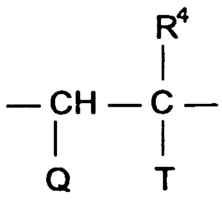

IIIa

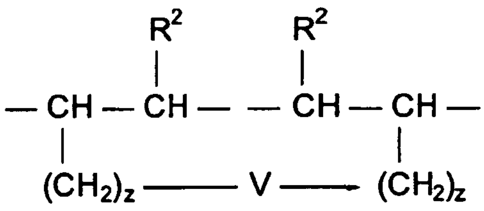

IIIb

In Formel IIIa kann $R^4$ = H oder $CH_3$ sein, je nachdem es sich um Acryl- oder Methacrylsäure-Derivate handelt. Q kann hierbei -H, $-COOM_a$ oder $-COOR^5$ bedeuten, wobei a und M die oben erwähnte Bedeutung besitzen und $R^5$ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen sein kann. Der aliphatische Kohlenwasserstoffrest kann ebenfalls linear oder verzweigt, gesättigt oder ungesättigt sein. Die bevorzugten cycloaliphatischen Kohlenwasserstoffreste sind wiederum Cyclopentyl- oder Cyclohexylreste und die bevorzugten Arylreste Phenyl- oder Naphthylreste. Im Falle von T = $-COOR^5$ ist Q = $-COOM_a$ oder $-COOR^5$. Für den Fall, dass T und Q = $-COOR^5$ sind, leiten sich die entsprechenden Baugruppen von den Dicarbonsäureestern ab.

Neben diesen Esterstruktureinheiten können die Baugruppen c) noch andere hydrophobe Strukturelemente besitzen. Hierzu gehören die Polypropylenoxid- bzw. Polypropylenoxid-Polyethylenoxid-Derivate mit

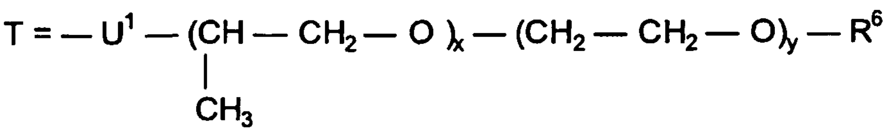

x nimmt hierbei einen Wert von 1 bis 150 und y von 0 bis 15 an. Die Polypropylenoxid (-Polyethylenoxid-)-Derivate können hierbei über eine Gruppierung $U^1$ mit dem Ethylrest der Baugruppe c) entsprechend Formel IIIa verknüpft sein, wobei $U^1$ = -CO-NH-, -O- oder $-CH_2-O-$ sein kann. Hierbei handelt es sich um die entsprechenden Amid-, Vinyl- oder Allylether der Baugruppe entsprechend Formel IIIa. $R^6$ kann hierbei wiederum $R^2$ (Bedeutung von $R^2$ siehe oben) oder

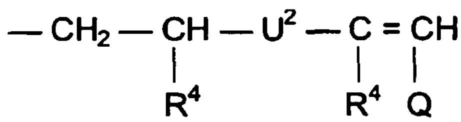

sein, wobei $U^2$ = -NH-CO-, -O-, oder $-OCH_2-$ bedeuten kann und Q die oben beschriebene Bedeutung besitzt. Diese Verbindungen stellen Polypropylenoxid(-Polyethylenoxid-)-Derivate von den bifunktionellen Alkenylverbindungen entsprechend Formel IIIa dar.

Als weitere hydrophobe Strukturelemente können die Baugruppen c) noch Verbindungen gemäß der Formel IIIa mit T = $(CH_2)_z-V-(CH_2)_z-CH=CH-R^2$ enthalten, wobei z = 0 bis 4 und V ein $-O-CO-C_6H_4-CO-O-$Rest sein kann sowie $R^2$ die oben angegebene Bedeutung besitzt. Hierbei handelt es sich um die entsprechenden difunktionellen Ethylenverbindungen gemäß der Formel IIIa, die über Estergruppierungen der Formel -O-CO-$C_6H_4$-CO-O-miteinander verknüpft sind und wobei nur eine Ethylengruppe copolymerisiert wurde. Diese Verbindungen leiten sich von den entsprechenden Dialkenyl-phenyldicarbonsäureestern ab.

Es ist im Rahmen der vorliegenden Erfindung auch möglich, dass nicht nur eine, sondern beide Ethylengruppen der difunktionellen Ethylenverbindungen copolymerisiert wurden. Dies entspricht im wesentlichen den Baugruppen entsprechend der Formel IIIb

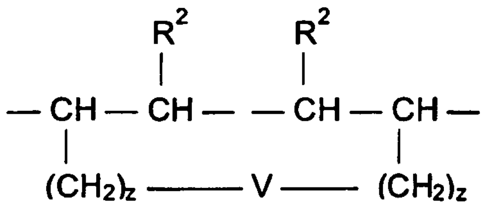

IIIb

wobei $R^2$, V und z die bereits beschriebene Bedeutung besitzen.

Die vierte Baugruppe d) leitet sich ab von einem ungesättigten Dicarbonsäure-Derivat der allgemeinen Formel IVa und/oder IVb

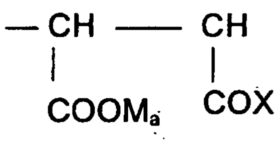

IVa

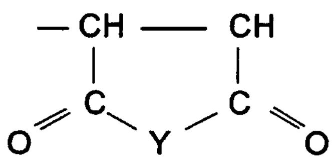

IVb

mit der oben angegebenen Bedeutung für a, M, X und Y.

Es ist als erfindungswesentlich anzusehen, dass die Copolymere 25 bis 98,99 Mol-% Baugruppen der Formel Ia und/oder Ib und/oder Ic, 1 bis 48,9 Mol-% Baugruppen der Formel II, 0,01 bis 6 Mol-% Baugruppen der Formel IIIa und/oder IIIb und 0 bis 60 Mol-% Baugruppen der Formel IVa und/oder IVb enthalten.

Vorzugsweise enthalten diese Polymere 70 bis 94,98 Mol-% Baugruppen der Formel Ia und/oder Ib, 5 bis 25 Mol-% Baugruppen der Formel II, 0,02 bis 2 Mol-% Baugruppen der Formel IIIa und/oder IIIb und 0 bis 24,98 Mol-% Baugruppen der Formel IVa und/oder IVb.

Gemäß einer bevorzugten Ausführungsform enthalten die erfindungsgemäßen Copolymere zusätzlich noch bis zu 50 Mol-%, insbesondere bis zu 20 Mol-% bezogen auf die Summe der Baugruppen a) bis d), Strukturen, die auf Monomeren auf Basis von Vinyl- oder (Meth-)Acrylsäure-Derivaten wie Styrol, $\alpha$-Methylstyrol, Vinylacetat, Vinylpropionat, Ethylen, Propylen, Isobuten, N-Vinylpyrrolidon, Allylsulfonsäure, Methallylsulfonsäure, Vinylsulfonsäure oder Vinylphosphonsäure beruhen.

Bevorzugte monomere (Meth-)Acrylsäure-Derivate sind Hydroxyalkyl(meth)acrylate, Acrylamid, Methacrylamid, AMPS, Methylmethacrylat, Methylacrylat, Butylacrylat oder Cyclohexylacrylat.

Die Anzahl der sich wiederholenden Struktureinheiten in den Copolymeren ist nicht eingeschränkt. Als besonders vorteilhaft hat es sich jedoch erwiesen, mittlere Molekulargewichte von 1.000 bis 100.000 g/Mol einzustellen.

Die Herstellung der erfindungsgemäßen Copolymere kann auf verschiedenen Wegen erfolgen. Wesentlich ist hierbei, dass man 25 bis 98,99 Mol-% eines ungesättigten Mono- oder Dicarbonsäure-Derivats, 1 bis 48,9 Mol-% eines Oxyalkylen-Alkenylethers, 0,01 bis 6 Mol-% einer vinylischen Polyalkylenglykol- oder Esterverbindung und 0 bis 60 Mol-% eines Dicarbonsäure-Derivates mit Hilfe eines radikalischen Starters polymerisiert.

Als ungesättigte Mono- oder Dicarbonsäure-Derivate, welche die Baugruppen der Formel Ia, Ib bzw. Ic bilden, werden vorzugsweise eingesetzt: Acrylsäure, Methacrylsäure, Itaconsäure, Itaconsäureanhydrid, Itaconsäureimid und Itaconsäuremonoamid.

Anstelle von Acrylsäure, Methacrylsäure, Itaconsäure und Itaconsäuremonoamid können auch deren ein- oder zweiwertige Metallsalze, vorzugsweise Natrium-, Kalium-, Calcium- oder Ammoniumsalze verwendet werden.

Als Acryl-, Methacryl- oder Itaconsäureester werden vor allem Derivate verwendet, deren alkoholische Komponente ein Polyalkylenglykol der allgemeinen Formel $HO-(C_mH_{2m}O)_n-R^2$ mit $R^2$ = H, aliphatischer Kohlenwasserstoffrest mit 1 bis 20 C-Atomen, cycloaliphatischer Kohlenwasserstoffrest mit 5 bis 8 C-Atomen, ggf. substituierter Arylrest mit 6 bis 14 C-Atomen sowie m = 2 bis 4 und n = 0 bis 200 darstellt.

Die bevorzugten Substituenten am Arylrest sind -OH-, $-COO^{\ominus}$- oder $-SO_3^{\ominus}$-Gruppen.

Die ungesättigten Monocarbonsäure-Derivate können nur als Monoester vorliegen, während im Falle der Dicarbonsäure Itaconsäure auch Diesterderivate möglich sind.

Die Derivate der Formel Ia, Ib und Ic können auch als Mischung von veresterten und freien Säuren vorliegen und werden in einer Menge von vorzugsweise 70 bis 94,98 Mol-% verwendet.

Die zweite erfindungswesentliche Komponente zur Herstellung der erfindungsgemäßen Copolymeren stellt ein Oxyalkylenglykol-Alkenylether dar, der vorzugsweise in einer Menge von 5 bis 25 Mol-% eingesetzt wird. Bei den bevorzugten Oxyalkylenglykol-Alkenylethern entsprechend der Formel V

$$CH_2 = CR^3 - (CH_2)_p - O - (C_mH2_mO)_{n'} - (C_{m'}H_{2m'}O)_{n''} - R^2 \qquad V$$

bedeuten $R^3$ = H oder ein aliphatischer Kohlenwasserstoffrest mit 1 bis 5 C-Atomen, m' = 2 bis 4, n' + n" = 250 bis 500 und p = 0 bis 3. $R^2$, m und n besitzen die bereits oben genannte Bedeutung. Als besonders vorteilhaft hat sich hierbei die Verwendung von Polyethylenglykolmonovinylether (p = 0 und m = 2) erwiesen, wobei n vorzugsweise Werte zwischen 1 und 50 besitzt.

Als dritte erfindungswesentliche Komponente zur Einfiihrung der Baugruppe c) werden vorzugsweise 0,02 bis 2 Mol-% einer vinylischen Polyalkylenglykol- oder Ester-Verbindung eingesetzt. Als bevorzugte vinylische Polyalkylenglykol-Verbindungen werden Derivate entsprechend der Formel VI verwendet,

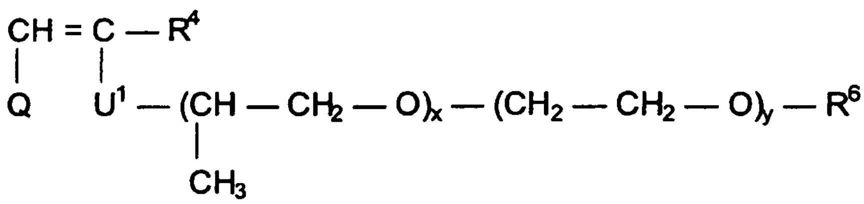

VI

wobei Q vorzugsweise -H, oder $-COOM_a$, $R^4$ = -H, $CH_3$ und $U^1$ = -CO-NH-, -O- oder $-CH_2O$- sein können, d. h. es handelt sich um die Säureamid-, Vinyl- oder Allylether der entsprechenden Polypropylenglykol- bzw. Polypropylenglykol-Polyethylenglykol-Derivate. Die Werte für x sind 1 bis 150 und für y = 0 bis 15. $R^6$ kann entweder wiederum $R^2$ sein oder

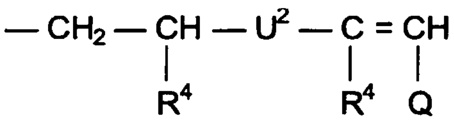

bedeuten, wobei $U^2$= -NH-CO-, -O- sowie $-OCH_2$- und Q = $-COOM_a$ und vorzugsweise -H ist.

Im Falle von $R^6 = R^2$ und $R^2$ vorzugsweise H handelt es sich um die Polypropylenglykol (-Polyethylenglykol)-Monoamide bzw. Ether der entsprechenden Acryl- (Q = H, $R^4$ = H), Methacryl- (Q = H, $R^4 = CH_3$) oder Maleinsäure- (Q = $-COOM_a-R^4$ = H)-Derivate. Beispiele für solche Monomere sind Maleinsäure-N-(methylpolypropylenglykol-) monoamid, Maleinsäure-N-(methoxy-polypropylenglykol-polyethylenglykol-) monoamid, Polypropylenglykol-vinylether und Polypropylenglykol-allylether.

Im Falle von $R^6 \neq R^2$ handelt es sich um bifunktionelle Vinylverbindungen, deren Polypropylenglykol-(Polyethylenglykol-)Derivate über Amid- oder Ethergruppen (-O-bzw. $-OCH_2$-) miteinander verbunden sind. Beispiele für solche Verbindungen sind Polypropylenglykol-bis-maleinamidsäure, Polypropylenglykoldiacrylamid, Polypropylenglykoldimethacrylamid, Polypropylenglykoldivinylether, Polypropylenglykoldiallylether.

Als vinylische Esterverbindung im Rahmen der vorliegenden Erfindung werden vorzugsweise Derivate entsprechend der Formel VII eingesetzt,

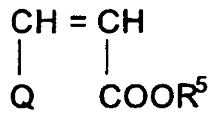

VII

wobei Q = $-COOM_a$ oder $-COOR^5$ bedeuten und $R^5$ ein aliphatischer Kohlenwasserstoffrest mit 3 bis 20 C-Atomen, ein cycloaliphatischer Kohlenwasserstoffrest mit 5 bis 8 C-Atomen sowie ein Arylrest mit 6 bis 14 C-Atomen sein kann. a und M besitzen die oben genannte Bedeutung. Beispiele für solche Esterverbindungen sind Di-n-butylmaleinat bzw. -fumarat oder Mono-n-butylmaleinat- bzw. -fumarat.

Desweiteren können auch Verbindungen entsprechend der Formel VIII eingesetzt werden

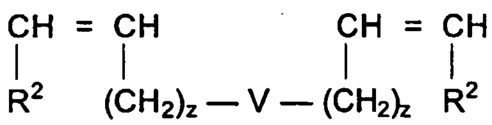

VIII

wobei z wiederum 0 bis 4 sein kann und $R^2$ die bereits bekannte Bedeutung besitzt. V bedeutet hierbei $-O-CO-C_6H_4-CO-O-$. Diese Verbindungen stellen bspw.

Dialkenylphthalsäure-Derivate dar. Ein typisches Beispiel für solche Phthalsäure-Derivate ist Diallylphthalat.

Die Molekulargewichte der Verbindungen, welche die Baugruppe c) bilden, können in weiten Grenzen variiert werden und liegen vorzugsweise zwischen 150 und 10 000.

Als vierte Komponente zur Herstellung der erfindungsgemäßen Copolymere können vorzugsweise 0 bis 24,98 Mol-% eines ungesättigten Dicarbonsäure-Derivats IX verwendet werden:

$$M_aOOC - CH = CH - COX \qquad IX$$

mit der bereits angegebenen Bedeutung für a, M und X.

Für den Fall X = $OM_a$ leitet sich das ungesättigte Dicarbonsäure-Derivat ab von Maleinsäure, Fumarsäure, ein- oder zweiwertige Metallsalze dieser Dicarbonsäuren, wie dem Natrium-, Kalium-, Calcium- oder Ammoniumsalz bzw. Salze mit einem organischen Aminrest. Außerdem verwendete Monomere, welche die Einheit Ia bilden, sind Polyalkylenglykolmonoester der oben genannten Säuren mit der allgemeinen Formel X

$$M_aOOC - CH = CH - COO - (C_mH_{2m}O)_n - R^2 \qquad X$$

mit der bereits angegebenen Bedeutung für a, m, n und $R^2$.

Die vierte Komponente kann sich auch ableiten von den ungesättigten Dicarbonsäureanhydriden und Imiden der allgemeinen Formel XI

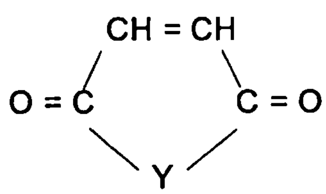

XI

mit der oben angegebenen Bedeutung für Y.

Erfindungsgemäß können nach einer bevorzugten Ausführungsform noch bis zu 50, vorzugsweise bis zu 20 Mol-%, auf die Summe der Baugruppen a) bis d) bezogen, weiterer Monomere wie oben beschrieben eingesetzt werden.

Die Copolymere entsprechend der vorliegenden Erfindung können nach den üblichen Methoden hergestellt werden. Ein besonderer Vorteil besteht darin, dass man erfindungsgemäß ohne Lösemittel oder aber in wässriger Lösung arbeiten kann. In beiden Fällen handelt es sich um drucklose und daher sicherheitstechnisch unbedenkliche Reaktionen.

Wird das Verfahren in wässriger Lösung durchgeführt, so erfolgt die Polymerisation bei 20 bis 100 °C mit Hilfe eines üblichen Radikalstarters, wobei die Konzentration der wässrigen Lösung vorzugsweise auf 30 bis 50 Gew.-% eingestellt wird. Gemäß einer bevorzugten Ausführungsform kann die radikalische Polymerisation hierbei im sauren pH-Bereich durchgeführt werden, insbesondere bei einem pH-Wert zwischen 4,0 und 6,5, wobei auf die herkömmlichen Initiatoren wie $H_2O_2$ zurückgegriffen werden kann, ohne dass es zu einer befürchteten Etherspaltung kommt, wodurch die Ausbeuten sehr stark beeinträchtigt würden.

Beim erfindungsgemäßen Verfahren wird vorzugsweise so gearbeitet, dass das ungesättigte Dicarbonsäure-Derivat, welches die Strukturgruppe d) bildet, in teilneutralisierter Form in wässriger Lösung, bevorzugt zusammen mit dem Polymerisationsinitiator vorgelegt wird und die übrigen Monomeren zudosiert werden, sobald die erforderliche Reaktionstemperatur in der Vorlage erreicht ist. Separat zugegeben werden die Polymerisations-Hilfsmittel, welche die Aktivierungsschwelle des vorzugsweise peroxidischen Initiators senken können, so dass die Copolymerisation bei relativ niedrigen Temperaturen ablaufen kann. Gemäß einer weiteren bevorzugten Ausführungsform kann das ungesättigte Dicarbonsäure-Derivat als auch der Radikalbildner in separaten oder gemeinsamen Zuläufen der Reaktorvorlage zudosiert werden, wodurch das Problem der Wärmeabführung in idealer Weise gelöst werden kann.

Es ist andererseits auch möglich, die die Strukturgruppe b) bildenden Polyoxyalkylenglykol-Alkenylether vorzulegen und das Mono- oder Dicarbonsäure-Derivat (Baugruppe a)) so zuzudosieren, dass eine gleichmäßige Verteilung der Monomereinheiten über die Polymerkette erreicht wird.

Die Art der verwendeten Polymerisationsinitiatoren, -aktivatoren und sonstigen Hilfsmittel, wie z. B. Molekulargewichtsregler, ist relativ unproblematisch, d. h. als Initiatoren kommen die üblichen Radikalspender zum Einsatz, wie Wasserstoffperoxid, Natrium-, Kalium- oder Ammoniumperoxodisulfat, tert. Butylhydroperoxid, Dibenzoylperoxid, Natriumperoxid, 2,2'-Azobis-(2-amidinopropan)-dihydrochlorid, Azobis-(isobutyronitril) usw. Kommen Redoxsysteme zum Einsatz, so werden oben genannte Initiatoren mit reduzierend wirkenden Aktivatoren kombiniert. Beispiele für derartige Reduktionsmittel sind Fe(II)-salze, Natriumhydroxymethansulfinat-Dihydrat, Alkalimetallsulfite und -metabisulfite, Natriumhypophosphit, Hydroxylaminhydrochlorid, Thioharnstoff usw.

Ein besonderer Vorteil der erfindungsgemäßen Copolymere ist die Tatsache, dass sie auch ohne Lösemittel hergestellt werden können, was mit Hilfe der üblichen radikalischen Starter bei Temperaturen zwischen 20 und 150 °C erfolgen kann. Diese Variante kann aus wirtschaftlichen Gründen insbesondere dann angewendet werden, wenn die erfindungsgemäßen Copolymere in wasserfreier Form direkt ihrer erfindungsgemäßen Verwendung zugeführt werden sollen, weil dann eine aufwendige Abtrennung des Lösemittels, insbesondere des Wassers (bspw. durch Sprühtrocknung) entfallen kann.

Die erfindungsgemäßen Copolymere eignen sich hervorragend als Zusatzmittel für wässrige Suspensionen anorganischer und organischer Feststoffe auf der Basis von mineralischen oder bituminösen Bindemitteln wie Zement, Gips, Kalk, Anhydrit oder sonstigen Calciumsulfat-basierenden Baustoffen, oder auf Basis von pulverförmigen Dispersionsbindemitteln, wobei sie in einer Menge von 0,01 bis 10 Ges.-%, insbesondere 0,051 bis 5 Gew.-%, bezogen auf das Gewicht des mineralischen Bindemittels, eingesetzt werden.

Die nachfolgenden Beispiele sollen die Erfindung näher erläutern.

Beispiele

Synthese- und Anwendungsbeispiele

Beispiel 1

In einem 1 Liter Doppelwandreaktionsgefäß mit Thermometer, Rührer, pH-Meter und zwei Eingängen für separate Zuläufe wurde eine Lösung bestehend aus 310 g (0,0258 Mol) Vinyloxybutyl-poly-(ethylenglykol) [mittleres Molekulargewicht 12,000 g/Mol] und 350 g Wasser bei Raumtemperatur vorgelegt.

Außerhalb des Reaktionsgefäßes wurden 23,81 g (0,33 Mol) Acrylsäure sowie 0,256 g (0,000142 Mol) eines Butanol gestarteten monofunktionellen $NH_2$ terminierten Ethylenoxid/Propylenoxid-Blockcopolymer (EO4, PO27; Molekulargewicht 1800 g/Mol) = $\alpha$-Butyl-$\omega$-(maleinamido)-poly-(ethylenglykol)-block-poly(propylenglykol) mit 61,91 g Wasser verdünnt.

Unter starkem Rühren und Kühlen wurden 38,2 g des Acrylsäure-Wasser Gemisches zu der Vinylpolyether-Wasser Lösung zugegeben und es wurde gewartet, bis die Starttemperatur von 15 °C erneut erreicht wurde. Anschließend wurden 0,059 g Eisen(II) sulfat-heptahydrat und 0,3 g 3-Mercaptopropionsäure zudosiert und der pH-Wert mittels einer

20 %igen NaOH-Lösung auf 5,3 eingestellt. Die Reaktion wurde durch die Zugabe von 1,5 g 30 %iges wässriges Wasserstoffperoxid gestartet. 40,38 g der Acrylsäurelösung, der vorher 3,4 g 3-Mercaptopropionsäure zugegeben wurden, wurden über einen Zeitraum von 30 Minuten zudosiert. Separat hierzu erfolgte die Dosierung von 10 ml einer 6 %igen wässrigen Lösung von Brüggolit™ innerhalb von 40 Minuten.

Nach beendeter Zugabe wurde die Lösung unter Rühren durch Zugabe von 24,1 ml einer 20 %igen Natriumhydroxidlösung auf einen pH Wert von 6,5 eingestellt. Die leicht gelblich gefärbte trübe wässrige Polymerlösung enthielt 42,5 % Feststoff. Das gewichtsmittlere Molekulargewicht des Copolymerisates betrug 65,700 g/mol.

Beispiel 2

Beispiel 1 wurde wiederholt, jedoch wurde anstelle des dort verwendeten Vinyloxybutylpoly(ethylenglykols) [MW 12,000 g/Mol] ein Polyether mit einem mittleren Molekulargewicht von 20,000 g/Mol verwendet.

Folgende Einsatzmengen lagen dem Beispiel zugrunde:

| | |
|---|---|
| 16,13 g | (0,224 Mol) Acrylsäure |
| 350,00 g | (0,0175 Mol) Vinyloxybutyl-poly-(ethylenglykol) |
| 0,18 g | (0,0001 Mol) $\alpha$-Butyl-$\omega$-(maleinamido)-poly-(ethylenglykol)-blockpoly-(propylenglykol) |

Es wurde eine hellgelbe, trübe wässrige Polymerlösung erhalten mit einem gewichtsmittleren Molekulargewicht von 72,300 g/Mol.

Beispiel 3

Es wurde verfahren wie unter Beispiel 1 beschrieben, jedoch mit einem deutlich gesteigerten Anteil an Acrylsäure von 47,62 g (0,66 Mol). Alle anderen Monomere wurden in derselben Einsatzmenge wie in Beispiel 1 verwendet.

Nach Neutralisation mit wässriger Natronlauge wurde eine Copolymerisatlösung mit einem mittleren Molekulargewicht von 60,800 g/Mol erhalten.

Beispiel 4

Die in Beispiel 1 verwendete Menge an Acrylsäure wurde auf ein Drittel der dort verwendeten Menge reduziert, d. h. 7,94 g (0,11 Mol). Erhalten wurde eine leicht gelb gefärbte Polymerlösung mit MW = 58,700 g/Mol.

Beispiel 5

Nach der in Beispiel 1 beschriebenen Prozedur wurde ein Copolymer aus folgenden Monomeren synthetisiert:

| | |
|---|---|
| 23,81 g | (0,33 Mol) Acrylsäure |
| 310,00 g | (0,026 Mol) Vinyloxybutyl-poly-(ethylenglykol) mit MW = 12,000 g/Mol |
| 7,42 g | (0,034 Mol) Maleinsäure-dibutylester |
| 49,0 g | (0,50 Mol) Maleinsäureanhydrid |

Das erhaltene bräunlich gefärbte wässrige Copolymerisat hatte ein mittleres Molekulargewicht von 36,900 g/Mol.

Beispiel 6

Analog zu Beispiel 1 wurde ein Copolymer synthetisiert, welches anstatt der dort verwendeten Acrylsäure 21,84 g (0,195 Mol) Itaconsäureanhydrid enthielt. Das gewichtsmittlere Molekulargewicht des Endproduktes lag bei 42,300 g/Mol.

Beispiel 7

Beispiel 1 wurde wiederholt. Zusätzlich zu den dort verwendeten Monomeren wurden - zusammen mit dem Acrylsäure/Wasser-Gemisch -

123,2 g (0,112 Mol) Methylpoly(ethylenglykol)-methacrylat (MW = 1100 g/Mol)

in die Reaktorlösung dosiert.

Das leicht getrübte wässrige Reaktionsprodukt hatte ein mittleres Molekulargewicht von 69,300 g/Mol.

Beispiel 8

Nach dem im Beispiel 1 beschriebenen Verfahren wurde ein Copolymer (MW 60,000 g/Mol) hergestellt, wobei anstelle der Acrylsäure ein Gemisch aus Methacrylsäure und Acrylsäure (jeweils 0,165 Mol) verwendet wurde.

Beispiel 9

Anstelle des in Beispiel 1 verwendeten Vinyloxybutyl-poly(ethylenglykol) mit dem gewichtsmittleren Molekulargewicht von 12,000 g/Mol wurde ein Gemisch aus 2 Vinylethern verwendet:

Komponente 1 : 204 g (0,017 Mol) Vinylpolyether-12000
Komponente 2 : 68 g (0,034 Mol) Vinylpolyether-2000 (Vinyloxybutyl-PEG mit mittleren MW von 2000 g/Mol)

Beide Komponenten wurden in der Vorlage mit 300 g Wasser gemischt. Das resultierende Copolymerisat wies ein gewichtsmittleres Molekulargewicht von 59,900 g/Mol auf.

Beispiel 10

Zusätzlich zu dem im Beispiel 1 verwendeten Vinylether wurden

5,2 g (0,05 Mol) Styrol

zusammen mit dem Vinylether vorgelegt. Die erhaltene stark getrübte wässrige Polymerlösung war geruchfrei und hatte ein gewichtsmittleres Molekulargewicht von 70,600 g/Mol.

Beispiele 11 bis 14

Anstelle des in Beispiel 1 verwendeten EO/PO-Adduktes (Copolymerbestandteil III) wurden folgende Verbindungen eingesetzt:

Beispiel 11

0,426 g (0,000213 Mol) $\alpha,\omega$-Bis-(maleinamido)-poly-(propylenglykol) (MW 2000 g/Mol)

Beispiel 12

0,254 g (0,000169 Mol) Methyl-poly-(ethylenglykol)-block-poly-(propylenglykol)-allylether (MW = 1500 g/Mol, E04, P022)

Beispiel 13

0,5 g (0,00025 Mol) $\alpha,\overline{\omega}$-Bis-(methacryloyloxy)-poly-(propylenglykol) mit MW = 2000 g/Mol

Beispiel 14

4,674 g (0,019 Mol) Phthalsäure-diallylester

Beispiel 15

Anstelle des in Beispiel 1 verwendeten Vinylethers wurde folgende Verbindung eingesetzt:

260 g (0,02 Mol) Vinyloxybutyl-polyether-(propylenglykol)-block-poly (ethylenglykol) [P0 25, E0 250) mit MW = 13,000 g/Mol.

Die erhaltene gelbliche, stark trübe Polymerlösung wies ein Molekulargewicht von 70,300 g/Mol auf.

Beispiel 16

Beispiel 1 wurde wiederholt, jedoch wurden zusätzlich zur Acrylsäure im Zulauf

85,8 g (0,66 Mol) Hydroxypropylacrylat

verwendet.

Das erhaltene Copolymer hatte ein gewichtsmittleres Molekulargewicht von 74,700 g/Mol.

Molare Zusammensetzung der erfindungsgemäßen Copolymerisate:

| Beispiele | Zusammensetzung (Mol-%) | | | | |
|---|---|---|---|---|---|
| | I | II | III | IV | zusätliche Komponente |
| 1 | 92,71 | 7,25 | 0,04 | --- | --- |
| 2 | 92,72 | 7,24 | 0,04 | --- | --- |
| 3 | 96,22 | 3,76 | 0,02 | --- | --- |
| 4 | 80,92 | 18,98 | 0,10 | --- | --- |
| 5 | 37,08 | 2,92 | 3,82 | 56,18 | |
| 6 | 88,26 | 11,68 | 0,06 | --- | --- |
| 7 | 70,52 + 23,93 1) | 5,51 | 0,03 | --- | --- |
| 8 | 46,36 + 46,36 2) | 7,24 | 0,04 | --- | --- |
| 9 | 86,58 | 4,46 + 8,92 3) | 0,04 | --- | --- |
| 10 | 81,29 | 6,36 | 0,03 | --- | 12,32 4) |
| 11 | 92,69 | 7,25 | 0,06 | -- | --- |
| 12 | 92,70 | 7,25 | 0,05 | --- | --- |
| 13 | 92,68 | 7,25 | 0,07 | --- | --- |
| 14 | 88,05 | 6,88 | 5,07 | --- | --- |
| 15 | 94,25 | 5,71 | 0,04 | --- | --- |
| 16 | 32,48 + 64,96 5) | 2,54 | 0,02 | --- | --- |

1) Gemisch aus Acrylsäure und MPEG-methacrylat-1100 (3 : 1)
2) Gemisch aus Acrylsäure und Methacrylsäure (1:1)
3) Gemisch aus VOBPEG-12000 und VOBPEG-2000 (1:2)
4) Styrol
5) Gemisch aus Acrylsäure und Hydroxypropylacrylat (1:2)

Vergleichsbeispiel

Handelsübliches Hochleistungsfließmittel (gemäß PCT/EP00/02251) Glenium ACE 30 der Degussa AG

Anwendungsbeispiele

Fertigteilbetonanwendung

Normgemäß wurden in einem Betonzwangsmischer 10 kg Portlandzement (Bernburger CEM I 52,5 R (ft)) mit 47,2 kg Zuschlägen (Sieblinie 0 bis 16 mm) und 3,6 kg Wasser (einschließlich des Wassers aus dem Zusatzmittel) gemischt. Die wässrigen Lösungen der erfindungsgemäßen bzw. des Vergleichsproduktes wurden zugesetzt und 4 bzw. 40 Minuten nach Testbeginn erfolgte die Bestimmung der Ausbreitmasse nach DIN EN 12350-5.

Die Zusammensetzung der Betonmischung ist in Tabelle 1 zusammengefasst:

Tabelle 1:

| W/Z-Wert | Zement [kg/m$^3$] | Zuschläge [kg/m$^3$] | Wasser [kg/m$^3$] |
|---|---|---|---|
| 0,37 | 400 | 1887 | 148 |

Im Anschluss an die Messung des Ausbreitmaßes wurden Prüfkörper mit 15 x 15 x 15 cm Kantenlänge hergestellt und bei 20 °C gelagert. Die Druckfestigkeit wurde nach 6, 8 und 10 Stunden bestimmt. Der Luftporengehalt der Prüfkörper lag bei 1,6 Vol.-%.

Die Ergebnisse sind in Tabelle 2 zusammengestellt:

Tabelle 2:

| Zusatzmittel | Dosierung [%w/w] | Ausbreitmaß in cm nach | | Druckfestigkeiten in MPa nach | | |
|---|---|---|---|---|---|---|
| | | 4 min | 40 min | 6h | 8h | 10h |
| Bsp. 1 | 0,21 | 63 | 39 | 3,2 | 15,1 | 27,8 |
| Bsp. 2 | 0,22 | 60 | 38 | 4,9 | 20,6 | 30,9 |
| Bsp. 3 | 0,18 | 67 | 37 | 3,6 | 19,0 | 28,3 |
| Bsp. 4 | 0,24 | 58 | 50 | 2,9 | 13,4 | 26,1 |
| Bp. 5 | 0,22 | 63 | 45 | 3,1 | 14,2 | 27,9 |
| Bsp. 6 | 0,21 | 57 | 50 | 3,1 | 13,8 | 29,9 |
| Bsp. 7 | 0,22 | 59 | 53 | 4,0 | 20,0 | 30,1 |
| Bsp. 8 | 0,21 | 62 | 40 | 3,3 | 15,7 | 25,9 |
| Bsp. 9 | 0,20 | 63 | 51 | 4,0 | 19,3 | 26,8 |
| Bsp. 10 | 0,21 | 62 | 39 | 4,2 | 14,3 | 27,9 |
| Bsp. 11 | 0,22 | 63 | 40 | 3,3 | 15,0 | 27,7 |
| Bp. 12 | 0,21 | 62 | 41 | 3,5 | 15,2 | 29,0 |
| Bp. 13 | 0,21 | 64 | 43 | 3,7 | 14,6 | 28,1 |
| Bsp. 14 | 0,20 | 59 | 42 | 3,0 | 13,9 | 28,0 |
| Bsp. 15 | 0,22 | 62 | 46 | 3,4 | 15,9 | 29,9 |
| Bp. 16 | 0,26 | 58 | 57 | 3,1 | 14,3 | 27,9 |
| Vgl. 1 | 0,22 | 52 | 30 | 2,0 | 9,4 | 25,0 |

Normgemäß wurden in einem Betonzwangsmischer 4,3 kg Portlandzement (Bernburger CEM I 52,5 R (ft)) mit 20,1 kg Zuschlägen (Sieblinie 0 bis 16 mm) und 1,6 kg Wasser (einschließlich des Wassers aus dem Zusatzmittel) gemischt. Die wässrigen Lösungen der erfindungsgemäßen bzw. des Vergleichsproduktes wurden zugesetzt und 4 Minuten nach Testbeginn erfolgte die Bestimmung der Ausbreitmaße nach DIN EN 12350-5.

Die Zusammensetzung der Betonmischung ist in Tabelle 3 zusammengefasst:

Tabelle 3:

| W/Z-Wert | Zement [kg/m3] | Zuschläge [kg/m3] | Wasser [kg/m3] |
|---|---|---|---|
| 0,39 | 400 | 1865 | 156 |

Im Anschluss an die Messung des Ausbreitmaßes wurden Prüfkörper mit 10 x 10 x 10 cm Kantenlänge hergestellt und bei 10 °C gelagert. Die Druckfestigkeit wurde nach 10, 12 und 16 Stunden bestimmt. Der Luftporengehalt der Prüfkörper lag bei 1,6 Vol.-%.

Die Ergebnisse sind in Tabelle 4 zusammengestellt:

Tabelle 4:

| Zusatzmittel | Dosierung [%w/w) | Ausbreitmaß in cm nach | | Druckfestigkeiten in MPa nach | | |
|---|---|---|---|---|---|---|
| | | 4 min | 40 min | 10 h | 12 h | 16 h |
| Bsp. 1 | 0,16 | 69 | 56 | 3,5 | 6,9 | 14,8 |
| Bsp. 2 | 0,18 | 65 | 55 | 3,9 | 8,9 | 17,8 |
| Bsp. 3 | 0,14 | 68 | 50 | 3,9 | 7,5 | 14,7 |
| Bsp. 4 | 0,20 | 64 | 60 | 2,9 | 6,0 | 12,8 |
| Bp. 5 | 0,18 | 68 | 58 | 3,5 | 6,7 | 14,1 |
| Bsp. 6 | 0,17 | 63 | 58 | 3,3 | 6,8 | 14,7 |
| Bsp. 7 | 0,20 | 65 | 63 | 3,3 | 6,1 | 13,7 |
| Bsp. 8 | 0,16 | 63 | 53 | 3,6 | 6,7 | 14,3 |
| Bsp. 9 | 0,15 | 66 | 54 | 3,6 | 6,8 | 15,3 |
| Bsp. 10 | 0,16 | 64 | 53 | 3,9 | 7,3 | 16,7 |
| Bsp. 11 | 0,19 | 65 | 56 | 3,5 | 6,8 | 15,0 |
| Bp. 12 | 0,16 | 64 | 59 | 3,6 | 7,0 | 17,0 |
| Bp. 13 | 0,16 | 62 | 53 | 3,7 | 7,1 | 15,0 |
| Bsp. 14 | 0,15 | 60 | 50 | 3,4 | 7,0 | 14,3 |
| Bsp. 15 | 0,18 | 65 | 56 | 4,0 | 8,0 | 15,0 |
| Bp. 16 | 0,20 | 62 | 58 | 3,6 | 7,2 | 16,9 |
| Vgl. 1 | 0,20 | 62 | 49 | 1,9 | 3,9 | 9,8 |

## Patentansprüche

**1.** Copolymere auf Basis von ungesättigten Mono- oder Dicarbonsäure-Derivaten und Oxyalkylenglykol-Alkenylethern, **dadurch gekennzeichnet, dass** sie

a) 25 bis 98,99 Mol-% der Baugruppen der Formel Ia und/oder Ib und/oder Ic

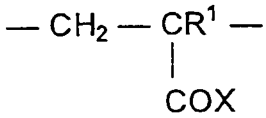 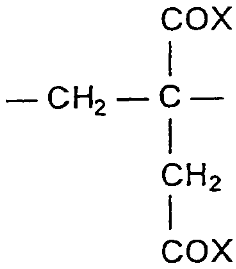 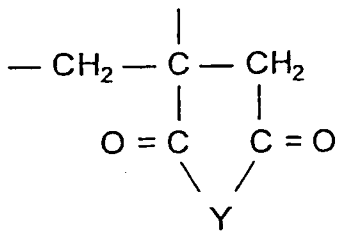

Ia Ib Ic

wobei $R^1$ = Wasserstoff oder ein aliphatischer Kohlenwasserstoffrest mit 1 bis 20 C-Atomen
X = $-OM_a$, $-O-(C_mH_{2m}O)_n-R^2$, $-NH-(C_mH_{2m}O)_nR^2$
M = Wasserstoff, ein ein- oder zweiwertiges Metallkation, Ammoniumion, ein organischer Aminrest,
a = ½ oder 1
$R^2$ = Wasserstoff, ein aliphatischer Kohlenwasserstoffrest mit 1 bis 20 C-Atomen, ein cycloaliphatischer Kohlenwasserstoffrest mit 5 bis 8 C-Atomen, ein ggf. substituierter Arylrest mit 6 bis 14 C-Atomen.
Y = O, $NR^2$
m = 2 bis 4 und
n = 0 bis 200
bedeuten,
b) 1 bis 48,9 Mol-% Baugruppe der allgemeinen Formel II

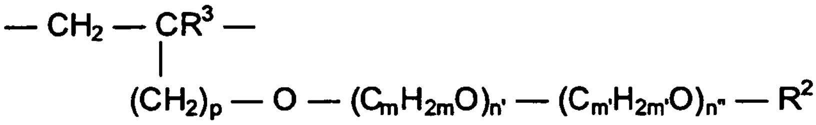

II

wobei $R^3$ für Wasserstoff oder einen aliphatischen Kohlenwasserstoffrest mit 1 bis 5 C-Atomen
m' für 2 bis 4
n' + n" für 250 bis 500
p für 0 bis 3 stehen und
$R^2$ sowie m die oben genannte Bedeutung besitzen,
c) 0,01 bis 6 Mol-% Baugruppen der Formel IIIa oder IIIb

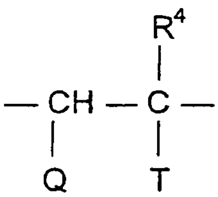 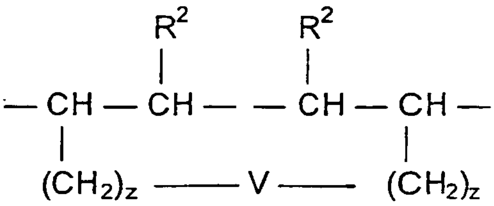

IIIa IIIb

wobei Q = -H, $-COOM_a$, $-COOR^5$

T =
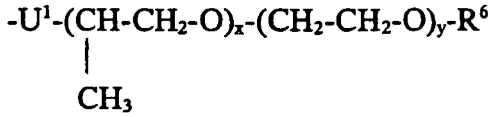

$-(CH_2)_z-V-(CH_2)_z-CH=CH-R^2$
$-COOR^5$ im Falle von Q = $-COOR^5$ oder $-COOM_a$
$U^1$ = -CO-NH-, -O-, $-CH_2O-$
$U^2$ = -NH-CO-, -O-, $-OCH_2-$
V = $-O-CO-C_6H_4-CO-O$
$R^4$ = H, $CH_3$
$R^5$ = aliphatischer Kohlenwasserstoffrest mit 3 bis 20 C-Atomen, cycloaliphatischer Kohlenwasserstoffrest mit 5 bis 8 C-Atomen, Arylrest mit 6 bis 14 C-Atomen $R^6 = R^2$,

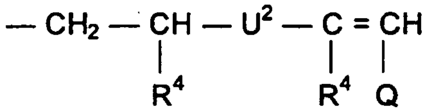

z = 0 bis 4
x = 1 bis 150
y = 0 bis 15
bedeuten sowie
d) 0 bis 60 Mol Baugruppen der allgemeinen Formel IVa und/oder IVb enthalten

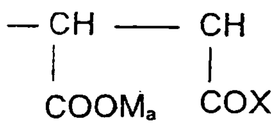

IVa

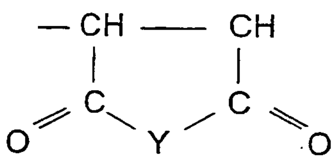

IVb

mit der oben angegebenen Bedeutung für a, M, X und Y.

**2.** Copolymere nach Anspruch 1, **dadurch gekennzeichnet, dass** $R^1$ einen Methylrest darstellt.

**3.** Copolymere nach Anspruch 1 oder 2, **dadurch gekennzeichnet, dass** M ein ein- oder zweiwertiges Metallkation ausgewählt aus der Gruppe Natrium-, Kalium-, Calcium- oder Magnesiumionen bedeutet.

**4.** Copolymere nach einem der Ansprüche 1 bis 3, **dadurch gekennzeichnet, dass** im Falle von $R^2$ = Phenyl der Phenylrest noch durch Hydroxyl-, Carboxyl- oder Sulfonsäure-Gruppen substituiert ist.

**5.** Copolymere nach einem der Ansprüche 1 bis 4, **dadurch gekennzeichnet, dass** in Formel Ia n = 1 bis 150 bedeuten

**6.** Copolymere nach einem der Ansprüche 1 bis 5, **dadurch gekennzeichnet, dass** in der Formel II p = 0 und m = 2 bedeuten.

**7.** Copolymere nach einem der Ansprüche 1 bis 6, **dadurch gekennzeichnet, dass** sie 70 bis 94,98 Mol-% Baugruppen der Formel Ia und/oder Ib und/oder Ic, 5 bis 25 Mol-% Baugruppen der Formel II, 0,02 bis 2 Mol-% Baugruppen der Formel IIIa und/oder IIIb sowie 0 bis 24,98 Mol-% Baugruppen der Formel IVa und/oder IVb enthalten.

8. Copolymere nach einem der Ansprüche 1 bis 7, **dadurch gekennzeichnet, dass** sie zusätzlich bis zu 50 Mol-%, insbesondere bis zu 20 Mol-%, bezogen auf die Summe der Baugruppen der Formel I, II, III und IV Baugruppen enthält, deren Monomere ein Vinyl- oder (Meth-)Acrylsäure-Derivat darstellt.

9. Copolymere nach Anspruch 8, **dadurch gekennzeichnet, dass** als monomeres Vinylderivat Styrol, $\alpha$-Methylstyrol, Vinylacetat, Vinylpropionat, Ethylen, Propylen, Isobuten, N-Vinylpyrrolidon, Allylsulfonsäure, Methallylsulfonsäure, Vinylsulfonsäure oder Vinylphosphonsäure verwendet wurde.

10. Copolymere nach Anspruch 9, **dadurch gekennzeichnet, dass** als monomeres (Meth-) Acrylsäurederivat Hydroxyalkyl(meth)acrylate, Acrylamid, Methacrylamid, AMPS, Methylmethacrylat, Methylacrylat, Butylacrylat oder Cyclohexylacrylat eingesetzt wurde.

11. Copolymere nach einem der Ansprüche 1 bis 10, **dadurch gekennzeichnet, dass** sie ein mittleres Molekulargewicht von 1 000 bis 100 000 g/mol aufweisen.

12. Verfahren zur Herstellung der Copolymeren nach einem der Ansprüche 1 bis 11, **dadurch gekennzeichnet, dass** man 25 bis 98,99 Mol-% eines ungesättigten Mono- oder Dicarbonsäure-Derivats, 1 bis 48,9 Mol-% eines Oxyalkylenglykol-Alkenylethers, 0,01 bis 6 Mol-% einer vinylischen Polyalkylenglykol- oder Ester-Verbindung sowie 0 bis 60 Mol-% eines Dicarbonsäure-Derivats mit Hilfe eines radikalischen Starters polymerisiert.

13. Verfahren nach Anspruch 12, **dadurch gekennzeichnet, dass** man 70 bis 94,88 Mol-% eines ungesättigten Mono- oder Dicarbonsäure-Derivats 5 bis 25 Mol-% eines Oxyalkylenglykol-Alkenylethers, 0,02 bis 2 Mol-% einer vinylischen Polyalkylenglykol- oder Ester-Verbindung und 0 bis 24,98 Mol-% eines Dicarbonsäure-Derivats einsetzt.

14. Verfahren nach einem der Ansprüche 12 und 13, **dadurch gekennzeichnet, dass** man noch zusätzlich bis zu 50 Mol-%, insbesondere bis zu 20 Mol-% bezogen auf die Monomeren mit den Baugruppen gemäß den Formeln I, II, III und IV eines Vinyl- oder (Meth-)Acrylsäure-Derivats copolymerisiert.

15. Verfahren nach einem der Ansprüche 12 bis 14, **dadurch gekennzeichnet, dass** man die Polymerisation in wässriger Lösung bei einer Temperatur von 20 bis 100 °C durchführt.

16. Verfahren nach Anspruch 15, **dadurch gekennzeichnet, dass** die Konzentration der wässrigen Lösung 30 bis 50 Gew.-% beträgt.

17. Verfahren nach einem der Ansprüche 12 bis 14, **dadurch gekennzeichnet, dass** man die Polymerisation ohne Lösemittel mit Hilfe eines radikalischen Starters bei Temperaturen von 20 bis 150 °C durchführt.

18. Verwendung der Copolymeren nach einem der Ansprüche 1 bis 11 als Zusatzmittel für wässrige Suspensionen auf Basis von mineralischen oder bituminösen Bindemitteln, insbesondere Zement, Gips, Kalk, Anhydrit, oder sonstige Calciumsulfat basierende Bindemittel sowie auf Basis von pulverförmigen Dispersionsbindemitteln.

19. Verwendung der Copolymeren nach Anspruch 18, **dadurch gekennzeichnet, dass** sie in einer Menge von 0,01 bis 10 Gew.-%, vorzugsweise 0,1 bis 5 Gew.-%, bezogen auf das Gewicht des mineralischen Bindemittels eingesetzt werden.

**Claims**

1. Copolymers based on unsaturated monocarboxylic or dicarboxylic acid derivatives and oxyalkylene glycol alkenyl ethers, **characterized in that** they contain

   a) 25 to 98.99 mol % of the structural groups of formula Ia and/or Ib and/or Ic

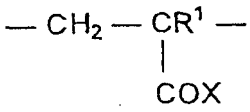

Ia

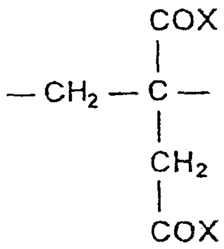

Ib

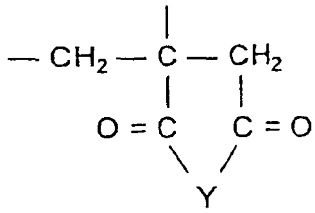

Ic

in which $R^1$ denotes hydrogen or an aliphatic hydrocarbon residue with 1 to 20 C atoms,
X denotes $-OM_a$, $-O-(C_mH_{2m}O)_n-R^2$, $-NH-(C_mH_{2m}O)_nR^2$,
M denotes hydrogen, a monovalent or divalent metal cation, an ammonium ion, an organic amine residue,
a denotes ½ or 1,
$R^2$ denotes hydrogen, an aliphatic hydrocarbon residue with 1 to 20 C atoms, a cycloaliphatic hydrocarbon residue with 5 to 8 C atoms, an optionally substituted aryl residue with 6 to 14 C atoms,
Y denotes O, $NR^2$
m denotes 2 to 4 and
n denotes 0 to 200
b) 1 to 48.9 mol % of the structural group of the general formula II

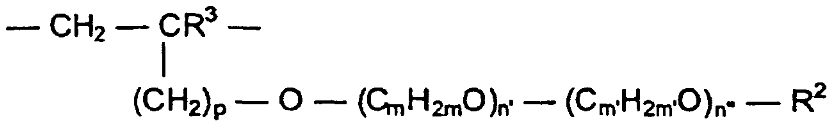

II

in which $R^3$ denotes hydrogen or an aliphatic hydrocarbon residue with 1 to 5 C atoms,
m' denotes 2 to 4
n' + n" denote 250 to 500
p denotes 0 to 3 and
$R^2$ and m have the above-mentioned meaning,
c) 0.01 to 6 mol % of structural groups of formula IIIa or IIIb

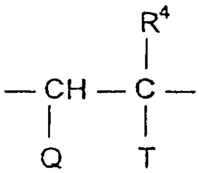

IIIa

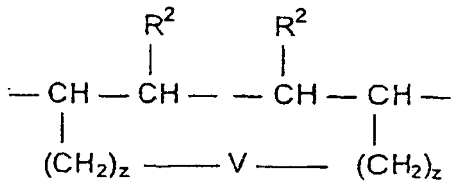

IIIb

in which Q denotes -H, $-COOM_a$, $-COOR^5$
T denotes

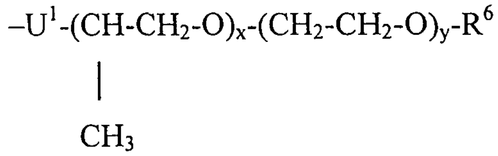

$-(CH_2)_2-V-(CH_2)_2-CH=CH-R^2$

$-COOR^5$ when $Q = -COOR^5$ or $-COOM_a$

$U^1$ denotes -CO-NH-, -O-, $-CH_2O-$

$U^2$ denotes -NHCO-, -O-, $-OCH_2-$

V denotes $-O-CO-C_6H_4-CO-O$

$R^4$ denotes H, $CH_3$

$R^5$ denotes an aliphatic hydrocarbon residue with 3 to 20 C atoms, a cycloaliphatic hydrocarbon residue with 5 to 8 C atoms, an aryl residue with 6 to 14 C atoms $R^6 = R^2$,

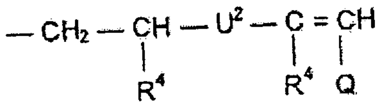

z denotes 0 to 4

x denotes 1 to 150

y denotes 0 to 15

and

d) 0 to 60 mol of structural groups of the general formulae IVa and/or IVb

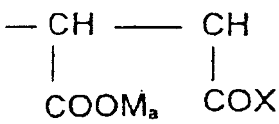

IVa

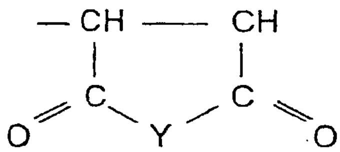

IVb

with the aforementioned meaning for a, M, X and Y.

2. Copolymers according to claim 1, **characterized in that** $R^1$ denotes a methyl residue.

3. Copolymers according to claim 1 or 2, **characterized in that** M denotes a monovalent or divalent metal cation selected from the group comprising sodium, potassium, calcium or magnesium ions.

4. Copolymers according to one of the claims 1 to 3, **characterized in that** in the case that $R^2$ denotes phenyl, the phenyl residue is further substituted by hydroxyl, carboxyl or sulphonic acid groups.

5. Copolymers according to one of the claims 1 to 4, **characterized in that** in formula Ia n denotes 1 to 150.

6. Copolymers according to one of the claims 1 to 5, **characterized in that** in formula II p denotes 0 and m denotes 2.

7. Copolymers according to one of the claims 1 to 6, **characterized in that** they contain 70 to 94.98 mol % of structural groups of formula Ia and/or Ib and/or Ic, 5 to 25 mol % of structural groups of formula II, 0.02 to 2 mol % of structural groups of formula IIIa and/or IIIb and 0 to 24.98 mol % of structural groups of formula IVa and/or IVb.

8. Copolymers according to one of the claims 1 to 7, **characterized in that** they additionally contain up to 50 mol %,

in particular up to 20 mol % based on the sum of the structural groups of formulae I, II, III and IV of structural groups, the monomers of which denote a vinyl or (meth)acrylic acid derivative.

9. Copolymers according to claim 8, **characterized in that** styrene, α-methylstyrene, vinyl acetate, vinyl propionate, ethylene, propylene, isobutene, N-vinylpyrrolidone, allylsulphonic acid, methallylsulphonic acid, vinyl sulphonic acid or vinyl phosphonic acid is used as the monomeric vinyl derivative.

10. Copolymers according to claim 9, **characterized in that** hydroxyalkyl-(meth)acrylate, acrylamide, methacrylamide, AMPS, methyl methacrylate, methyl acrylate, butyl acrylate or cyclohexyl acrylate is used as the monomeric (meth) acrylic acid derivative.

11. Copolymers according to one of the claims 1 to 10, **characterized in that** they have an average molecular weight of 1000 to 100 000 g/mol.

12. Process for the production of the copolymers according to one of the claims 1 to 11, **characterized in that** 25 to 98.99 mol % of an unsaturated monocarboxylic or dicarboxylic acid derivative, 1 to 48.9 mol % of an oxyalkylene glycol alkenyl ether, 0.01 to 6 mol % of a vinyl polyalkylene glycol or ester compound and 0 to 60 mol % of a dicarboxylic acid derivative are polymerized using a radical initiator.

13. Process according to claim 12, **characterized in that** 70 to 94.88 mol % of an unsaturated monocarboxylic or dicarboxylic acid derivative, 5 to 25 mol % of an oxyalkylene glycol alkenyl ether, 0.02 to 2 mol % of a vinyl polyalkylene glycol or ester compound and 0 to 24.98 mol % of a dicarboxylic acid derivative are used.

14. Process according to one of the claims 12 and 13, **characterized in that** up to 50 mol %, in particular up to 20 mol %, based on the monomers with the structural groups according to the formulae I, II, III and IV of a vinyl- or (meth) acrylic acid derivative are also copolymerized.

15. Process according to one of the claims 12 to 14, **characterized in that** the polymerisation is carried out in an aqueous solution at a temperature of 20 to 100°C.

16. Process according to claim 15, **characterized in that** the concentration of the aqueous solution is 30 to 50 % by weight.

17. Process according to one of the claims 12 to 14, **characterized in that** the polymerisation is carried out without a solvent using a radical initiator at temperatures of 20 to 150°C.

18. Use of the copolymers according to one of the claims 1 to 11 as an additive for aqueous suspensions based on mineral or bituminous binders in particular cement, gypsum, lime, anhydrite or other binders based on calcium sulphate and also based on powder dispersion binders.

19. Use of the copolymers according to claim 18, **characterized in that** they are used in a quantity of 0.01 to 10 % by weight, preferably 0.1 to 5 % by weight based on the weight of the mineral binder.

**Revendications**

1. Copolymères à base de dérivés insaturés d'acides mono- et dicarboxyliques et d'éthers d'alcényle et d'oxyalkylèneglycol, **caractérisés en ce qu'**ils contiennent

   a) de 25 à 98,99% en moles de groupes constitutifs de formule Ia et/ou Ib et/ou Ic

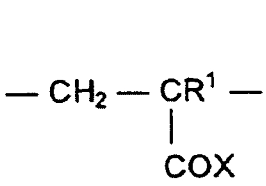
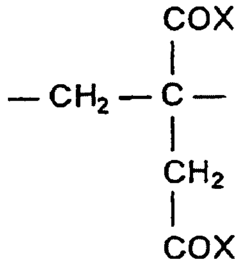
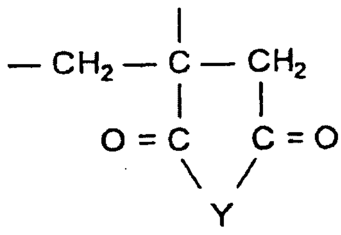

Ia Ib Ic

où $R^1$ = un atome d'hydrogène ou un résidu hydrocarboné aliphatique avec de 1 à 20 atomes de carbone
X = $-OM_a$, $-O-(C_mH_{2m}O)_n-R^2$, $-NH-(C_mH_{2m}O)_nR^2$
M = un atome d'hydrogène, un cation métallique mono- ou divalent, un ion ammonium, un résidu amine organique,
a = ½ ou 1
$R^2$ = un atome d'hydrogène, un résidu hydrocarboné aliphatique avec de 1 à 20 atomes de carbone, un résidu hydrocarboné cycloaliphatique avec de 5 à 8 atomes de carbone, un résidu aryle, éventuellement substitué, avec de 6 à 14 atomes de carbone.
Y = O, $NR^2$
m = de 2 à 4 et
n = de 0 à 200
b) de 1 à 48,9 % en moles de groupes constitutis de formule générale II

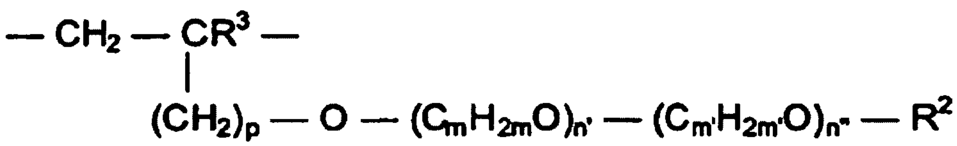

II

où $R^3$ est un atome d'hydrogène ou un résidu hydrocarboné aliphatique avec de 1 à 5 atomes de carbone,
m' va de 2 à 4
n' + n" va de 250 à 500
p vaut 0 à 3 et
$R^2$ et m ont les significations ci-dessus,
c) de 0,01 à 6% en moles de groupes constitutifs de formule IIIa ou IIIb

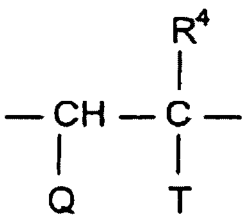
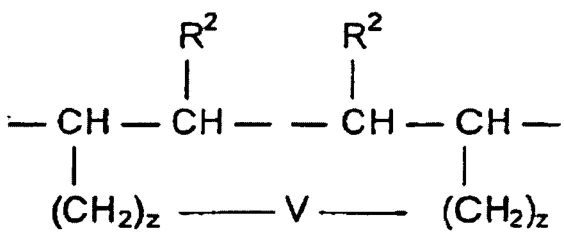

IIIa IIIb

où

**Q = -H. $-COOM_a$, $-COOR^5$**

T = 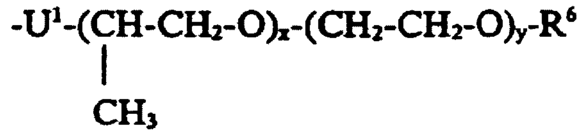

**-(CH2)z-V-(CH2)z-CH=CH- R2**

$-COOR^5$ dans le cas où Q = $-COOR^5$ ou $-COOM_a$
$U^1$ = -CO-NH-, -O-, $-CH_2O-$
$U^2$ = -NH-CO-, -O-, $-OCH_2-$
V = $-O-CO-C_6H_4-CO-O$
$R^4$ = H, $CH_3$
$R^5$ = un résidu hydrocarboné aliphatique avec de 3 à 20 atomes de carbone, un résidu hydrocarboné cycloaliphatique avec de 5 à 8 atomes de carbone, un résidu aryle avec de 6 à 14 atomes de carbone
$R^6 = R^2$

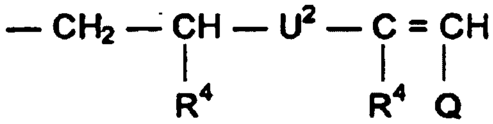

z = 0 à 4
x = 1 à 150
y = 0 à 15
et
d) de 0 à 60 moles de groupes constitutifs de formule générale IVa et/ou IVb

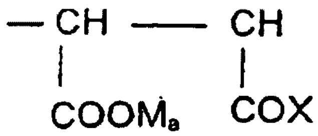

IVa

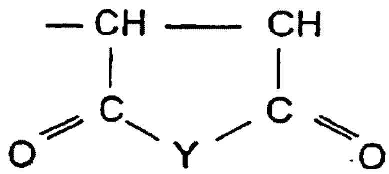

IVb

avec les significations ci-dessus pour a, M, X et Y.

2. Copolymères selon la revendication 1, **caractérisés en ce que** $R^1$ représente un résidu méthyle.

3. Copolymères selon la revendication 1 ou 2, **caractérisés en ce que** M correspond à un cation métallique mono- ou divalent choisi dans le groupe constitué des ions sodium, potassium, calcium et magnésium.

4. Copolymères selon l'une des revendications 1 à 3, **caractérisés en ce que,** au cas où $R^2$ = phényle, le résidu phényle est à son tour substitué par des groupes d'acide hydroxylique, carboxylique ou sulfonique.

5. Copolymères selon l'une des revendications 1 à 4, **caractérisés en ce que** n = 1 à 150 dans la formule Ia.

6. Copolymères selon l'une des revendications 1 à 5, **caractérisés en ce que,** dans la formule II, p=0 et m=2.

7. Copolymères selon l'une des revendications 1 à 6, **caractérisés en ce qu'**ils contiennent de 70 à 94,98% en moles

de groupes constitutifs de formule Ia et/ou Ib et/ou Ic, de 5 à 25% en moles de groupes constitutifs de formule II, de 0,02 à 2% en moles de groupes constitutifs de formule IIIa et/ou IIIb ainsi que de 0 à 24,98% en moles de groupes constitutifs de formule IVa et/ou IVb.

**8.** Copolymères selon l'une des revendications 1 à 7, **caractérisés en ce qu'**ils contiennent en outre jusqu'à 50% en moles, en particulier jusqu'à 20% en moles, par rapport à la somme des groupes constitutifs de formule I, II, III et IV, de groupes constitutifs dont les monomères sont des dérivés vinyliques ou des dérivés d'acide (méth)acrylique.

**9.** Copolymères selon la revendication 8, **caractérisés en ce qu'**on utilise, en tant que dérivé vinylique monomère, du styrène, de l'α-méthylstyrène, de l'acétate de vinyle, du propionate de vinyle, de l'éthylène, du propylène, de l'isobutène, de la N-vinylpyrrolidone, de l'acide allylsulfonique, de l'acide méthallylsulfonique, de l'acide vinylsulfonique ou de l'acide vinylphosphonique.

**10.** Copolymères selon la revendication 9, **caractérisés en ce qu'**on utilise en tant que dérivé d'acide (méth)acrylique monomère du (méth)acrylate d'hydroxyalkyle, de l'acrylamide, du méthacrylamide, de l'AMPS, du méthacrylate de méthyle, de l'acrylate de méthyle, de l'acrylate de butyle ou de l'acrylate de cyclohexyle.

**11.** Copolymères selon l'une des revendications 1 à 10, **caractérisés en ce qu'**ils présentent un poids moléculaire moyen de 1000 à 100 000 g/mole.

**12.** Procédé de fabrication de copolymères selon l'une des revendications 1 à 11, **caractérisé en ce qu'**on polymérise de 25 à 98,99% en moles d'un dérivé insaturé d'acide mono- ou dicarboxylique, de 1 à 48,9% en moles d'un éther d'alcényle et d'oxyalkylèneglycol, de 0,01 à 6% en moles d'un polyalkylèneglycol vinylique ou d'un ester vinylique ainsi que 0 à 60% en moles d'un dérivé d'acide dicarboxylique à l'aide d'un amorceur radicalaire.

**13.** Procédé selon la revendication 12, **caractérisé en ce qu'**on utilise de 70 à 94,88% en moles d'un dérivé insaturé d'acide mono- ou dicarboxylique, de 5 à 25% en moles d'un éther d'alcényle et d'oxyalkylène-glycol, de 0,02 à 2% en moles d'un polyalkylèneglycol vinylique ou d'un ester vinylique et de 0 à 24,98% en moles d'un dérivé d'acide dicarboxylique.

**14.** Procédé selon l'une des revendications 12 à 13, **caractérisé en ce qu'**on copolymérise en outre avec les groupes constitutifs selon les formules I, II, III et IV jusqu'à 50% en moles, en particulier jusqu'à 20% en moles, par rapport au monomères, d'un dérivé vinylique ou d'un acide (méth)acrylique.

**15.** Procédé selon l'une des revendications 12 à 14, **caractérisé en ce qu'**on réalise la polymérisation dans une solution aqueuse à une température de 20 à 100°C.

**16.** Procédé selon la revendication 15, **caractérisé en ce que** la concentration de la solution aqueuse va de 30 à 50% en poids.

**17.** Procédé selon l'une des revendications 12 à 14, **caractérisé en ce qu'**on réalise la polymérisation sans solvant à l'aide d'un amorceur radicalaire à des températures de 20 à 150°C.

**18.** Utilisation des copolymères selon l'une des revendications 1 à 11 comme additif dans des suspensions aqueuses à base de liants minéraux ou bitumineux, en particulier le ciment, le plâtre, la chaux, l'anhydrite ou d'autres liants à base de sulfates de calcium ainsi qu'à base de liants de dispersion sous forme de poudre.

**19.** Utilisation de copolymères selon la revendication 18, **caractérisée en ce qu'**ils sont utilisés en une quantité allant de 0,01 à 10% en poids, de préférence de 0,1 à 5% en poids, par rapport au poids du liant minéral.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 214412 A
- DE PS1671017 C
- EP 306449 A
- EP 373621 A
- DE 19513126 A1
- DE 19926611 A1
- EP 0002251 W